# EUROPEAN PATENT APPLICATION

(11) **EP 3 683 887 A1**
(43) Date of publication of application: **22.07.2020**
(21) Application number: 18874711.7
(22) Date of filing: 05.10.2018
(51) Int. Cl.: H01M 10/06, H01M 2/18, H01M 4/14, H01M 4/38, H01M 4/62, H01M 10/12

(54) **LEAD STORAGE BATTERY**

(30) Priority: 31.10.2017 JP 2017211357
(71) Applicant: GS Yuasa International Ltd., Kyoto-shi, Kyoto 601-8520 (JP)
(72) Inventor: KYO, Masaaki, Kyoto-shi Kyoto 601-8520 (JP); INAGAKI, Satoshi, Kyoto-shi Kyoto 601-8520 (JP); WADA, Hidetoshi, Kyoto-shi Kyoto 601-8520 (JP)
(74) Representative: Isarpatent
(86) International application number: PCT/JP2018/037297
(87) International publication number: WO 2019/087678

(57) **Abstract**

A lead-acid battery includes a positive electrode plate provided with a positive electrode material, a negative electrode plate, a separator interposed between the positive electrode plate and the negative electrode plate, and an electrolyte solution. The separator includes ribs on the positive electrode plate side and the negative electrode plate side. The positive electrode material contains 0.02% by mass or more of Sb.

## Description

### TECHNICAL FIELD

The present invention relates to a lead-acid battery.

### BACKGROUND ART

Lead-acid batteries are being used for various uses in addition to in-vehicle and industrial uses. The lead-acid battery includes a negative electrode plate, a positive electrode plate, a separator interposed between the negative electrode plate and the positive electrode plate, and an electrolyte solution.

Generally, a sulfuric acid aqueous solution is used as the electrolyte solution. Meanwhile, a separator having a rib may be used as the separator. Patent Literature 1 proposes a separator for a flooded-type lead-acid battery including a main rib and a mini rib formed on a surface opposite to the main rib.

### PRIOR ART DOCUMENT

### PATENT DOCUMENT

Patent Document 1: JP-A-2015-216125

### SUMMARY OF THE INVENTION

### PROBLEMS TO BE SOLVED BY THE INVENTION

The lead-acid battery is sometimes used in a poor charged state called a partial state of charge (PSOC). For example, the lead-acid battery is used in the PSOC during charge control or idling stop-start (ISS). Therefore, the lead-acid battery is required to be excellent in life performance in a cycle test under PSOC conditions (hereinafter referred to as PSOC life performance).

When the lead-acid battery is used in the PSOC state, stratification of the electrolyte solution proceeds, and softening of a positive active material and accumulation of lead sulfate in positive and negative active materials are promoted, to shorten the life. In addition, by the lead-acid battery being used in the stratified state for a long period of time, lead ions dissolved in the electrolyte solution are reduced on the negative electrode side, and the precipitated lead crystal may permeate the separator, causing a permeation short circuit.

### MEANS FOR SOLVING THE PROBLEMS

One aspect of the present invention relates to a lead-acid battery including: a positive electrode plate provided with a positive electrode material; a negative electrode plate; a separator interposed between the positive electrode plate and the negative electrode plate; and an electrolyte solution. The separator includes ribs on the positive electrode plate side and the negative electrode plate side, and the positive electrode material contains 0.02% by mass or more of Sb.

### ADVANTAGES OF THE INVENTION

In the lead-acid battery, the permeation short circuit can be prevented and excellent PSOC life performance can be ensured.

### BRIEF DESCRIPTION OF THE DRAWINGS

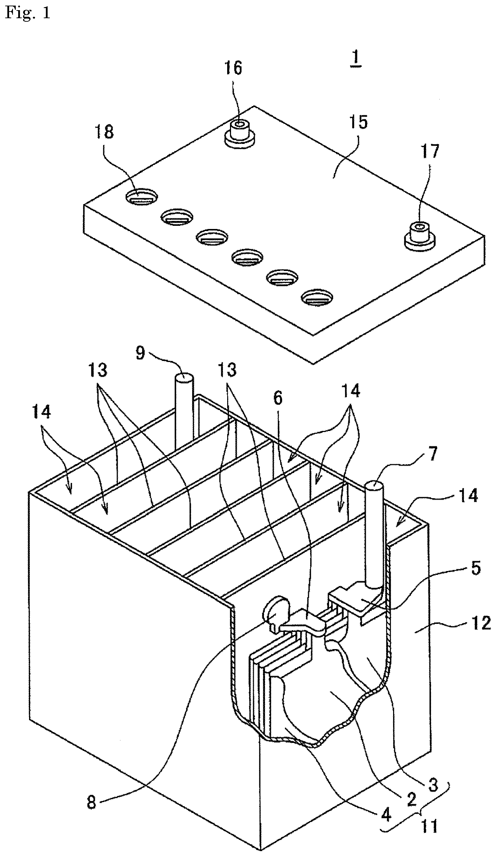

Fig. 1 is an exploded perspective view showing an external appearance and an internal structure of a lead-acid battery, which is partially cut off, according to one aspect of the present invention.

### MODES FOR CARRYING OUT THE INVENTION

A lead-acid battery according to one aspect of the present invention includes a positive electrode plate provided with a positive electrode material, a negative electrode plate, a separator interposed between the positive electrode plate and the negative electrode plate, and an electrolyte solution. The separator includes ribs on the positive electrode plate side and the negative electrode plate side. The positive electrode material contains 0.02% by mass or more of Sb.

In the lead-acid battery, during discharge, lead sulfate is generated at both the positive electrode and the negative electrode, and water is generated at the positive electrode. On the other hand, at the time of charge, metallic lead, lead dioxide, and sulfuric acid are generated from lead sulfate and water. By antimony (Sb) being contained in the positive electrode material, the softening of the positive electrode is prevented, and the accumulation of lead sulfate in the positive electrode is prevented. This leads to improvement in PSOC life performance.

However, on the other hand, when the PSOC life is prolonged, the amount of lead sulfate accumulated inevitably increases, so that the specific gravity of the electrolyte solution decreases. The decrease in the specific gravity of the electrolyte solution is particularly remarkable during overdischarge. When the electrolyte solution is not sufficiently stirred during charge, a difference in the concentration of sulfuric acid occurs between the upper and lower portions of the electrolyte solution (stratification occurs). When the use is continued in such an environment, a permeation short circuit is likely to occur in the upper portion where the specific gravity of the electrolyte solution is low.

A lead-acid battery in which antimony is added to the positive electrode material has a long PSOC life, and as a result, the permeation short circuit is likely to occur at the end of the life due to the long-term use in the stratified state. However, according to the above aspect of the present invention, with the separator including the ribs on both the positive electrode plate side and the negative electrode plate side, the close contact between the separator and the electrode plate is prevented, and the permeation short circuit hardly occurs. In addition, the diffusivity of the electrolyte solution is improved to prevent the stratification.

The present inventors have found that in a lead-acid battery, by antimony being contained in a positive electrode material at 0.02% by mass or more and by using a separator provided with ribs on both the positive electrode plate side and the negative electrode plate side, the occurrence of permeation short circuit is prevented, and in addition to that, it is further effective for the improvement in PSOC life as compared to a case where a rib is provided only on the positive electrode plate side, thereby reaching the present invention.

In the lead-acid batteries assumed to be in PSOC are often used in a poor charged state, and main degradation mode is the falling of the active material due to the softening degradation of the positive electrode material in addition to the accumulation of lead sulfate in the positive and negative electrode material. Therefore, an attempt was made to improve the PSOC life in such a manner that antimony was contained in the positive electrode material to prevent the softening degradation. However, although the PSOC life was improved by the addition of antimony, a phenomenon occurred in which the permeation short circuit is likely to occur, that is, the degradation mode changes from the softening and falling to the permeation short circuit. The cause of the permeation short circuit was investigated, and it was found for the first time that, when the lead-acid battery is continuously used in the poor charged state, due to a small distance between the separator and the negative electrode plate, the battery comes into the overdischarged state locally, and the permeation short circuit occurs in this region. Hence it was found that, when a rib is provided on the negative electrode plate side and a space is provided between the separator and the negative electrode plate, the softening prevention effect by antimony is further maintained in addition to that the permeation short circuit is prevented, so that the PSOC life can be further increased.

The separator includes a first rib provided on the negative electrode plate side and a second rib provided on the positive electrode plate side. The first rib of the separator prevents the separator from coming into close contact with the negative electrode plate. The second rib of the separator prevents the separator from coming into close contact with the positive electrode plate. Further, the first rib of the separator improves the diffusivity of the electrolyte solution near the negative electrode plate, thereby preventing a decrease in the specific gravity of the electrolyte solution near the negative electrode plate during discharge. Moreover, during charge, an increase in the specific gravity of the electrolyte solution near the negative electrode plate is prevented. This improves the charge efficiency, prevents the accumulation of lead sulfate, and improves the PSOC life performance together with the effect exerted by the addition of antimony. The second ribs of the separator improve the diffusivity of the electrolyte solution near the positive electrode plate and can prevent the oxidation degradation of the separator, thereby further improving the PSOC life performance.

It is conceivable that part of antimony added to the positive electrode material has been eluted, and a small amount of antimony has been diffused in the electrolyte solution or to the negative electrode side. Antimony deposited on the negative electrode promotes gas generation during charge. However, by providing the first rib, the charge efficiency is improved, and hence the amount of gas generated can be decreased. As compared to a lead-acid battery provided with a one-side rib or no rib, the lead-acid battery of the present embodiment having the first rib and the second rib generates a small amount of gas but has high diffusivity of the electrolyte solution. It is thus conceivable that the electrolyte solution is more efficiently stirred during gas generation, thereby preventing the stratification. It is conceivable that as a result of synergy of these, an effect of further improving the PSOC life performance has been developed.

The content (additive amount) of antimony (Sb) in the positive electrode material is preferably 0.02% by mass or more and 0.2% by mass or less. With the content of Sb being 0.02% by mass or more, a sufficient effect of improving the PSOC life performance is obtained. On the other hand, as the content of Sb increases, the amount of gas generated during charge increases, and the decreased amount of liquid increases. The content of Sb is more preferably 0.2% by mass or less from the viewpoint of preventing an unnecessary decrease in liquid while obtaining the effect of improving the PSOC life performance. More preferably, the content of Sb is 0.1% by mass or less. This is because the decreased amount of liquid can be decreased while the effect of improving the PSOC life performance is obtained.

Here, the mass of the positive electrode material is a mass at the time of washing and drying the positive electrode material taken out of a fully charged lead-acid battery, and the content of Sb indicates the ratio of the mass of Sb in the positive electrode material in terms of metal. Although it is conceivable that Sb exists in the form of a compound (e.g., an oxide or a sulfate compound), in that case, only the mass of Sb in the compound is considered, and the content of Sb in terms metal is calculated.

It is preferred that antimony (Sb) be also contained in the electrolyte solution 0.001% by mass or more and 0.01% by mass or less with respect to the entire electrolyte solution, and be also contained in the negative electrode material 0.001% by mass or more and 0.01% by mass or less.

The content of antimony (Sb) contained in the positive and negative electrode materials is obtained by disassembling a chemically converted, fully charged lead-acid battery, washing and drying the removed electrode plate, collecting the electrode material, dissolving a ground sample in concentrated nitric acid, and performing inductively coupled plasma (ICP) emission analysis. Similarly, the content of antimony contained in the electrolyte solution is obtained by performing the ICP emission analysis of the electrolyte solution.

In the present specification, the fully charged state of the lead-acid battery is a state where, in the case of a flooded-type battery, in a water bath at 25°C, constant current charge is performed at a current of 0.2 CA to reach 2.5 V/cell, and then the constant current charge is further performed at 0.2 CA for two hours. In the case of a valve regulated battery, the fully charged state is a state where a constant current constant voltage charge of 2.23 V/cell is performed at 0.2 CAin an air tank at 25°C, and the charge is ended at the point when the charge current at the time of constant voltage charge becomes 1 mCA or lower.

In the present specification, 1 CA is a current value (A) having the same numerical value as the nominal capacity (Ah) of the battery. For example, when the battery has a nominal capacity of 30 Ah, 1 CAis 30 A, and 1 mC A is 30 mA.

The separator may have a bag shape. When a bag-shaped separator is used, the electrolyte solution is likely to stay. However, by providing the first rib and the second rib, the diffusivity of the electrolyte solution in the separator increases, and the PSOC life performance can be further improved. At the positive electrode, water is generated during discharge, and hence the specific gravity of the electrolyte solution changes more than near the negative electrode plate. However, since the bag-shaped separator stores the positive electrode plate, the stratification of the electrolyte solution is easily prevented. Meanwhile, when the bag-shaped separator stores the negative electrode plate, a short circuit due to extension of a positive electrode grid is easily prevented. Further, the formation of the first rib in the bag increases the diffusivity of the electrolyte solution near the negative electrode plate to easily prevent the stratification.

The lead-acid battery may include a fiber mat interposed between the positive electrode plate and the negative electrode plate. When the fiber mat is provided, the electrode plate is pressed by the fiber mat to decrease the amount of electrolyte solution around the electrode plate and also decrease the diffusivity. However, by providing the first rib at least on the negative electrode plate side of the separator, even when the fiber mat is provided, the electrolyte solution can be held near the negative electrode plate and the diffusivity of the electrolyte solution can be improved.

Hereinafter, the lead-acid battery according to the embodiment of the present invention will be described for each of the main components, but the present invention is not limited to the following embodiment.

### (Separator)

The separator includes a base made of a microporous film, a rib protruding from one main surface of the base, and a rib protruding from the other main surface of the base. The rib protruding from one main surface of the base is disposed so as to be located on the negative electrode plate side. The rib located on the negative electrode plate side is called a first rib. The rib protruding from the other main surface of the base is disposed on the positive electrode plate side (i.e., so as to face the positive electrode plate). The rib located on the positive electrode plate side is called a second rib. The first rib can enhance the diffusivity of the electrolyte solution near the negative electrode plate, so that the PSOC life performance can be further improved and the permeation short circuit can be prevented.

The separator is formed using a polymer material (but different from fibers). At least the base is a porous sheet and can also be called a porous film. The separator may include a filler (e.g., a particulate filler such as silica, and/or a fibrous filler) that is dispersed in a matrix formed using a polymer material. The separator is preferably made of a polymer material having acid resistance. As such a polymer material, a polyolefin such as polyethylene or polypropylene is preferred.

The average thickness of the base is, for example, 100 pm or more and 300 pm or less, and preferably 150 pm or more and 250 pm or less. When the average thickness of the base is in such a range, the height of the first rib, as well as the height of the second rib if necessary, can be easily ensured while the capacity is kept high.

The average thickness of the base is obtained by measuring the thickness of the base at five freely selected locations in a cross-sectional photograph of the separator and averaging the measured thickness.

The first rib is formed on the surface of the separator facing the negative electrode plate. The average height of the first rib is, for example, 0.05 mm or more, and preferably 0.07 mm or more. When the average height of the first rib is in such a range, the electrolyte solution is more easily diffused. From the viewpoint of ensuring a high capacity, the average height of the first rib is, for example, 0.40 mm or less, and preferably 0.20 mm or less. Any combination of these lower and upper limits is possible. The separator is preferably formed with the first rib at such an average height in at least a region facing the negative electrode plate (preferably, a region where the negative electrode material is present). For example, the first rib having such an average height is preferably formed in 70% or more of the area of the region facing the negative electrode plate.

Note that the height of the first rib refers to a distance from one main surface of the base to the top of the first rib at a predetermined position of the first rib. In a case where the main surface of the base is not flat, the height of the first rib is assumed to be the distance from the highest position of one main surface of the base to the top of the first rib at a predetermined position of the first rib when the separator is placed flat with the first rib side facing up. The average height of the first ribs is obtained by averaging the heights of the first ribs measured at ten freely selected locations of the first ribs on one main surface of the base.

The pattern of the first rib on one main surface of the base is not particularly limited, and the first rib may be formed at random or may be formed in a stripe shape, a curved shape, a grid shape, or the like. From the viewpoint of making the electrolyte solution more easily diffused, it is preferable to form a plurality of first ribs on one main surface of the base so as to be arranged in stripes. The orientation of the stripe-shaped first ribs is not particularly limited, and for example, the plurality of first ribs may be formed along the height direction or the width direction of the negative electrode plate. A difference is likely to be produced in specific gravity of the electrolyte solution between the upper and lower portions of the electrode plate, it is thus preferable to form the plurality of first ribs in a stripe shape along the height direction of the negative electrode plate from the viewpoint of further increasing the diffusivity of the electrolyte solution.

Note that a lug for extracting current from the electrode group is usually formed at one end of each of the negative electrode plate and the positive electrode plate. The vertical direction of the negative electrode plate or the positive electrode plate with the lug directed upward is referred to as the height direction of the negative electrode plate or the positive electrode plate. The width direction of the negative electrode plate or the positive electrode plate is a direction orthogonal to the height direction and crossing the main surface of the negative electrode plate or the positive electrode plate.

The pitch of the stripe-shaped or grid-shaped first ribs is, for example, 0.3 mm or more and 10 mm or less, and preferably 0.5 mm or more and 5 mm or less. When the separator includes a region in which the first ribs are formed at a pitch in such a range, an effect of improving the diffusivity of the electrolyte solution near the negative electrode plate is easily obtained. In the separator, the first ribs are preferably formed at such a pitch in a region facing the negative electrode plate. For example, the first ribs having such a pitch are preferably formed in 70% or more of the area of the region facing the negative electrode plate. In a region not facing the negative electrode plate, such as the end of the separator, the first rib may or may not be formed, and a plurality of first ribs may be formed densely (e.g., at an average pitch of 0.5 mm or more and 5 mm or less).

Note that the pitch of the first ribs is the distance between the tops of the adjacent first ribs (more specifically, the distance between the centers of the adjacent first ribs in a direction crossing the first ribs).

The average pitch of the first ribs is obtained by averaging the pitches of the first ribs measured at ten freely selected locations. When the first ribs are densely formed in a region not facing the negative electrode plate, the average pitch may be calculated excluding this region. The average pitch of the first ribs in the region not facing the negative electrode plate can be calculated for this region similarly to the above.

The second rib is formed on the surface of the separator facing the positive electrode plate. The average height of the second rib is, for example, 0.3 mm or more, and preferably 0.4 mm or more. When the average height of the second rib is within such a range, the oxidation degradation of the separator is easily prevented. From the viewpoint of ensuring a high capacity, the average height of the second rib is, for example, 1.0 mm or less, and may be 0.7 mm or less. Any combination of these lower and upper limits is possible.

The average height of the second rib is obtained according to the case of the first rib. The height of the second rib refers to a distance from the other main surface of the base to the top of the second rib at a predetermined position of the second rib, according to the case of the first rib.

The pattern and the orientation of the second rib are not particularly limited and may be selected, for example, from those described for the first rib. The pitch of the stripe-shaped or grid-shaped second rib is, for example, 1 mm or more and 15 mm or less, and preferably 5 mm or more and 10 mm or less. When the separator includes a region in which the second ribs are formed at a pitch in such a range, an effect of preventing the oxidation degradation of the separator is further enhanced. In the separator, the second ribs are preferably formed at such a pitch in a region facing the positive electrode plate. For example, the second ribs having such a pitch are preferably formed in 70% or more of the area of the region facing the positive electrode plate. In a region not facing the positive electrode plate, such as the end of the separator, the second rib may or may not be formed, and a plurality of second ribs may be formed densely (e.g., at an average pitch of 0.5 mm or more and 5 mm or less).

Note that the pitch of the second ribs is the distance between the tops of the adjacent second ribs (more specifically, the distance between the centers of the adjacent second ribs in a direction crossing the second rib). The average pitch of the second ribs can be calculated according to the average pitch of the first ribs.

The sheet-shaped separator may be sandwiched between the negative electrode plate and the positive electrode plate, or the separator may be interposed between the negative electrode plate and the positive electrode plate by storing the negative electrode plate or the positive electrode plate in the bag-like separator. When a bag-shaped separator is used, the electrolyte solution is hardly diffused, but the provision of the first rib and the second rib improves the diffusivity. When the negative electrode plate is stored in the bag-shaped separator, the first ribs can easily enhance the diffusivity of the electrolyte solution near the negative electrode plate and can prevent a short circuit caused by separator breakage even when the positive electrode current collector extends. When the positive electrode plate is stored in the bag-shaped separator, the stratification of the electrolyte solution is easily prevented.

The separator is obtained by, for example, extruding a resin composition containing a pore-forming additive (a solid pore-forming additive such as a polymer powder, and/or a liquid pore-forming additive such as an oil), a polymer material, and the like to be molded into a sheet shape, and then removing the pore-forming additive to form pores in the matrix of the polymer material. The rib may be formed, for example, at the time of the extrusion molding, or may be formed by performing the press with a roller having a groove corresponding to the rib after the molding into the sheet shape or the removal of the pore-forming additive. When a filler is used, the filler is preferably added to the resin composition.

### (Electrolyte solution)

The electrolyte solution contains sulfuric acid in the aqueous solution. The electrolyte solution may be gelled if necessary. The electrolyte solution may contain an additive used for a lead-acid battery, if necessary.

The specific gravity at 20°C of the electrolyte solution in a fully charged lead-acid battery after chemical conversion is, for example, 1.10 g/cm³ or more and 1.35 g/cm³ or less.

### (Positive electrode plate)

There are a paste type and a clad type in the positive electrode plate of the lead-acid battery.

The paste-type positive electrode plate includes a positive electrode current collector and a positive electrode material. The positive electrode material is held in the positive electrode current collector. In the paste-type positive electrode plate, the positive electrode material is a material with the positive electrode current collector removed from the positive electrode plate. The positive electrode current collector may be formed similarly to the negative electrode current collector, and can be formed by casting lead or a lead alloy or processing a lead or lead alloy sheet.

The clad-type positive electrode plate includes a plurality of porous tubes, a spine inserted into each tube, a positive electrode material with which a spine inserted tube is filled, and a joint that joins the plurality of tubes. In the clad-type positive electrode plate, the positive electrode material is a material with the tube, the spine, and the joint removed from the positive electrode plate.

As a lead alloy used for the positive electrode current collector, a Pb-Ca-based alloy and a Pb-Ca-Sn-based alloy are preferred in terms of corrosion resistance and mechanical strength. The positive electrode current collector may have a lead alloy layer with a different composition, and a plurality of alloy layers may be provided. It is preferable to use a Pb-Ca-based alloy or a Pb-Sb-based alloy for the spine.

The positive electrode material contains a positive active material (lead dioxide or lead sulfate) that develops a capacity through an oxidation-reduction reaction. The positive electrode material may contain other additives if necessary.

A non-chemically converted paste-type positive electrode plate is obtained in such a manner that a positive electrode current collector is filled with a positive electrode paste, which is then cured and dried, according to the case of the negative electrode plate. Thereafter, a non-chemically converted positive electrode plate is chemically converted. The positive electrode paste is prepared by kneading lead powder, an additive, water, and sulfuric acid.

A non-chemically converted clad-type positive electrode plate is formed by mixing an additive and lead powder or slurry-like lead powder in a spine inserted tube, filling the mixture, and joining a plurality of tubes with a joint.

As an additive, the positive electrode material contains antimony (Sb). As for the content of antimony (Sb), the content of Sb in the positive electrode material after the chemical conversion is 0.02% by mass or more. Examples of the additive containing antimony include metal antimony (Sb), antimony oxides such as antimony trioxide (Sb₂O₃), antimony tetroxide, and antimony pentoxide, and antimony sulfate (Sb₂(SO₄)₃). An alloy of Pb and Sb may be mixed with the metal Pb of the lead powder material.

### (Negative electrode plate)

The negative electrode plate of the lead-acid battery is made up of a negative electrode current collector and a negative electrode material. The negative electrode material is a material obtained with the negative electrode current collector removed from the negative electrode plate. The negative electrode current collector may be formed by casting lead (Pb) or a lead alloy or may be formed by processing a lead or lead alloy sheet. Examples of the processing method include an expanding process and a punching process. The use of a negative electrode grid as the negative electrode current collector is preferred because the negative electrode material is easily supported.

The lead alloy used for the negative electrode current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like.

The negative electrode material contains a negative active material (lead or lead sulfate) that develops a capacity through an oxidation-reduction reaction. The negative electrode material may contain an expander, a carbonaceous material such as carbon black, barium sulfate, or the like, and may contain other additives.

The negative active material in a charged state is spongy lead, whereas a non-chemically converted negative electrode plate is usually produced using lead powder.

The negative electrode plate can be formed in such a manner that a negative electrode current collector is filled with a negative electrode paste, which is then cured and dried to prepare a non-chemically converted negative electrode plate, and then the non-chemically converted negative electrode plate is chemically converted. The negative electrode paste is prepared by adding water and sulfuric acid to the lead powder, the organic expander, and various additives if necessary, and mixing these. In the curing step, it is preferable to cure the non-chemically converted negative electrode plate at a temperature higher than room temperature and with high humidity.

The chemical conversion can be performed by charging the electrode group in a state where the electrode group including the non-chemically converted negative electrode plate is immersed in the electrolyte solution containing sulfuric acid in the container of the lead-acid battery. However, the chemical conversion may be performed before the lead-acid battery or the electrode group is assembled. The chemical conversion produces spongy lead.

### (Fiber mat)

The lead-acid battery may further include a fiber mat interposed between the positive electrode plate and the negative electrode plate. When the fiber mat is disposed, the electrode plate is pressed by the fiber mat, and it becomes difficult to hold the electrolyte solution around the electrode plate. In the above aspect of the present invention, the first rib is provided on the separator, so that the electrolyte solution can be easily ensured near the negative electrode plate, and high diffusivity of the electrolyte solution can be ensured.

The fiber mat is different from the separator and is made of a sheet-shaped fiber aggregate. As such a fiber aggregate, a sheet in which fibers insoluble in the electrolyte solution are entangled is used. Such sheets include, for example, nonwoven fabrics, woven fabrics, knits, and the like.

As the fibers, it is possible to use glass fibers, polymer fibers (polyolefin fibers, acrylic fibers, polyester fibers such as polyethylene terephthalate fibers, etc.), pulp fibers, and the like. Among the polymer fibers, polyolefin fibers are preferred.

The fiber mat may contain components in addition to the fibers, such as an acid-resistant inorganic powder and a polymer as a binder. As the inorganic powder, it is possible to use silica powder, glass powder, diatomaceous earth, and the like. However, the fiber mat is mainly composed of the fibers. For example, 60% by mass or more of the fiber mat is formed using the fibers.

The fiber mat may be disposed between the negative electrode plate and the positive electrode plate. With the separator being also disposed between the negative electrode plate and the positive electrode plate, the fiber mat may be provided between the negative electrode plate and the positive electrode plate, for example, between the negative electrode plate and the separator, and/or between the separator and the positive electrode plate. From the viewpoint of preventing the stratification of the electrolyte solution, the fiber mat is preferably disposed so as to be in contact with the negative electrode plate. In addition, from the viewpoint of preventing the softening and falling of the positive electrode material, it is preferable to dispose the fiber mat so as to be in contact with the positive electrode plate. From the viewpoint of enhancing an effect of preventing the softening and falling, it is preferable to dispose the fiber mat in the state of being pressed against the positive electrode plate, but in this case, the electrolyte solution near the negative electrode plate is likely to be insufficient. In the present embodiment, since the first ribs are provided on the surface of the separator facing the negative electrode plate, even when the fiber mat is disposed on the positive electrode plate side, the electrolyte solution can be ensured near the negative electrode plate.

Fig. 1 shows an external view of an example of a lead-acid battery according to an embodiment of the present invention.

A lead-acid battery 1 includes a container 12 storing an electrode group 11 and an electrolyte solution (not shown). The inside of the container 12 is partitioned into a plurality of cell chambers 14 by partitions 13. In each cell chamber 14, one electrode group 11 is stored. The opening of the container 12 is closed with a lid 15 having a negative electrode terminal 16 and a positive electrode terminal 17. The lid 15 is provided with a vent plug 18 for each cell chamber. At the time of water addition, the vent plug 18 is removed, and a water addition liquid is supplied. The vent plug 18 may have a function of discharging gas generated in the cell chamber 14 to the outside of the battery.

The electrode group 11 is configured by stacking a plurality of negative electrode plates 2 and positive electrode plates 3 with a separator 4 interposed therebetween. Here, the bag-shaped separator 4 storing the negative electrode plate 2 is shown, but the form of the separator is not particularly limited. In the cell chamber 14 located at one end of the container 12, a negative electrode shelf 6 for connecting the plurality of negative electrode plates 2 in parallel is connected to a through-connector 8, and a positive electrode shelf 5 for connecting the plurality of positive electrode plates 3 in parallel is connected to a positive electrode pole 7. The positive electrode pole 7 is connected to the positive electrode terminal 17 outside the lid 15. In the cell chamber 14 located at the other end of the container 12, the negative electrode pole 9 is connected to the negative electrode shelf 6, and the through-connector 8 is connected to the positive electrode shelf 5. The negative electrode pole 9 is connected to the negative electrode terminal 16 outside the lid 15. Each through-connector 8 passes through a through-hole provided in the partition 13 and connects the electrode groups 11 of the adjacent cell chambers 14 in series.

### [Example]

Hereinafter, the present invention will be specifically described based on examples and comparative examples, but the present invention is not limited to the following examples.

### <<Lead-acid battery A1>>

### (1) Preparation of negative electrode plate

A negative electrode paste was obtained by mixing lead powder, water, diluted sulfuric acid, carbon black, and an organic expander. A mesh of an expanded grid made of a Pb-Ca-Sn-based alloy as a negative electrode current collector was filled with the negative electrode paste, which was then cured and dried to obtain a non-chemically converted negative electrode plate. Sodium lignin sulfonate was used as the organic expander. The additive amounts of the carbon black and the organic expander were adjusted so that the contents thereof contained in 100% by mass of the negative electrode material were 0.3% by mass and 0.2% by mass, respectively. The carbon black and the organic expander were then mixed into the negative electrode paste.

### (2) Preparation of positive electrode plate

A positive electrode paste was prepared by mixing lead powder, water, and sulfuric acid. A mesh of an expanded grid made of a Pb-Ca-Sn-based alloy as a positive electrode current collector was filled with the positive electrode paste, which was then cured and dried to obtain a non-chemically converted positive electrode plate.

### (3) Preparation of lead-acid battery

Each non-chemically converted negative electrode plate was stored into a bag-shaped separator formed using a polyethylene microporous film, and an electrode group was formed using seven non-chemically converted negative electrode plates and six non-chemically converted positive electrode plates per cell. The separator had a plurality of stripe-shaped second ribs on the outside of the bag. As the separator, a separator provided with the first rib inside the bag was used. The plurality of second ribs were each formed along the height direction of the positive electrode plate, the average height of the second ribs was 0.4 mm, and the pitch of the second ribs in a region facing the positive electrode plate was 10 mm. The average thickness of the base of the separator was 200 µm.

The electrode group was inserted into a container made of polypropylene, the container was filled with an electrolyte solution, and chemical conversion was performed in the container, to assemble a flooded-type lead-acid battery A1 having a nominal voltage of 12 V and a nominal capacity of 30 Ah (five-hour rate). As the electrolyte solution, an aqueous solution containing sulfuric acid and having a specific gravity of 1.28 at 20°C was used.

### <<Lead-acid batteries A2 to A7>>

In the preparation of the positive electrode plate, lead powder, water, an additive containing antimony (Sb), and sulfuric acid were mixed to prepare a positive electrode paste. Antimony trioxide (Sb₂O₃) was used as the additive containing antimony (Sb). As the additive, an additive with its additive amount of Sb adjusted so that its content contained in 100% by mass of the positive electrode material after chemical conversion was a mass% shown in Table 1 was used. Except for this, lead-acid batteries A2 to A7 were assembled similarly to the lead-acid battery A1.

### <<Lead-acid battery B1>>

As the separator, a separator having the first rib inside the bag was used. The separator has a plurality of stripe-shaped first ribs inside the bag, the plurality of first ribs were respectively formed along the height direction of the negative electrode plate, the average height of the first ribs was 0.1 mm, and the pitch of the first ribs in a region facing the negative electrode plate was 1 mm. The average height and pitch of the second ribs and the average thickness of the base of the separator were the same as those of the lead-acid battery A1.

A lead-acid battery B1 was assembled similarly to the lead-acid battery A1, except that a separator provided with ribs on both the positive electrode plate side and the negative electrode plate side was used.

### <<Lead-acid batteries B2 to B7>>

In the preparation of the positive electrode plate, lead powder, water, an additive containing antimony (Sb), and sulfuric acid were mixed to prepare a positive electrode paste. As the additive, an additive with its additive amount of Sb adjusted so that its content contained in 100% by mass of the positive electrode material after chemical conversion was a mass% shown in Table 1 was used. Except for this, lead-acid batteries B2 to B7 were assembled similarly to lead-acid battery B1.

### [Evaluation 1: PSOC life performance]

The lead-acid battery was charged and discharged under the idling stop condition in accordance with SBAS 0101: 2014. Specifically, (a) to (c) below were repeated as one cycle at 25°C until the discharge end voltage became 7.2 V or less, and the number of cycles at this time was obtained. The PSOC life performance was evaluated by the ratio at the time when the number of cycles in the lead-acid battery A1 was set to 100. At the time of charge and discharge, the operation was suspended for 40 to 48 hours every 3600 cycles.
(a) Discharge 1: discharge is performed at a current value of 32 A for 59 seconds.
(b) Discharge 2: discharge is performed at a current value of 300 A for one second.
(c) Charge: charge is performed at limited current of 100 A and a voltage of 14.0 V for 60 seconds.

### [Evaluation 2: Measurement of specific gravity difference in electrolyte solution]

In Evaluation 1, a specific gravity of an upper portion (30 mm below the liquid surface) and a lower portion (10 mm above the bottom of the container) of the electrolyte solution after 18000 cycles had elapsed was obtained, and a specific gravity difference was obtained. The obtained specific gravity difference was expressed by a ratio at the time when the specific gravity difference in the lead-acid battery A1 was set to 100. The smaller the specific gravity difference, the more the stratification is prevented.

### [Evaluation 3: Permeation short circuit]

The lead-acid battery after being evaluated in Evaluation 1 was disassembled, the separator was taken out, and the presence or absence of a permeation mark of lead was confirmed. The surface of the separator facing the negative electrode was visually observed, and when a clear permeation mark of 1 mm or more was confirmed, the separator was regarded as having a permeation mark.

Table 1 shows the results of Evaluations 1 to 3 of the lead-acid batteries A1 to A7 and B1 to B7.

### [Evaluation 4: Measurement of decreased amount of liquid]

The difference between the battery mass when the life ends in Evaluation 1 and the battery mass before Evaluation 1 was determined, and the difference was divided by the number of cycles of the PSOC life to obtain the decreased amount of liquid per cycle. The obtained decreased amount of liquid per cycle was expressed as a ratio at the time when the decreased amount of liquid per cycle in the lead-acid battery A1 was set to 100. The smaller the decreased amount of liquid per cycle, the more the decrease in liquid is prevented.

**[Table 1]**

| Battery | Rib | Sb content in positive electrode [% by mass] | Upper/lower specific gravity difference after life test | PSOC life (Number of cycles) | Decreased amount of liquid | Permeation mark |
|---|---|---|---|---|---|---|
| A1 | Only second rib on positive electrode plate side | 0 | 100 | 100 | 100 | No |
| A2 | | 0.02 | 93 | 120 | 101 | Yes |
| A3 | | 0.05 | 88 | 127 | 103 | Yes |
| A4 | | 0.1 | 83 | 138 | 114 | Yes |
| A5 | | 0.15 | 75 | 149 | 129 | Yes |
| A6 | | 0.2 | 75 | 160 | 145 | Yes |
| A7 | | 0.25 | 68 | 158 | 178 | Yes |
| B1 | First and second ribs on both positive and negative electrode plate sides | 0 | 93 | 105 | 81 | No |
| B2 | | 0.02 | 75 | 132 | 82 | No |
| B3 | | 0.05 | 60 | 140 | 83 | No |
| B4 | | 0.1 | 45 | 152 | 85 | No |
| B5 | | 0.15 | 38 | 164 | 105 | No |
| B6 | | 0.2 | 38 | 175 | 115 | No |
| B7 | | 0.25 | 40 | 177 | 144 | No |

As shown in Table 1, in the lead-acid batteries B2 to B7 in which ribs are included on both the positive electrode plate side and the negative electrode plate side and 0.02% by mass or more of Sb is contained in the positive electrode material, the precipitation of lead in the separator does not occur, and the PSOC life performance is greatly improved, as compared to the lead-acid battery A1

It can be seen from Table 1 that both in the lead-acid batteries A2 to A7, each provided with the second rib only on the positive electrode plate side, and the lead-acid batteries B2 to B7, each provided with the first rib and the second rib on both the negative electrode plate side and the positive electrode plate side, the stratification is prevented and the PSOC life performance is improved with an increase in the additive amount of Sb, and the PSOC life performance has been improved. However, in each of the lead-acid batteries A2 to A7, the negative electrode plate and the separator were stuck, and the permeation and precipitation of lead in the separator were confirmed. It is conceivable that this is due to an environment where the amount of electrolyte solution between the negative electrode plate and the separator base is insufficient, so that the specific gravity of the electrolyte solution is likely to decrease, and lead ions are likely to be dissolved.

The lead-acid batteries A1 and B1, A2 and B2, A3 and B3, A4 and B4, A5 and B5, A6 and B6, and A7 and B7, both having the same content of Sb, are compared. For different lead-acid batteries X and Y, the ratio of stratification prevention of the lead-acid battery Y with respect to the lead-acid battery X is expressed by: 1 - (specific gravity difference between upper and lower portions of lead-acid battery Y)/(specific gravity difference between upper and lower portions of lead-acid battery X). Similarly, the improvement rate of the PSOC life performance of the lead-acid battery Y with respect to the lead-acid battery X is expressed by: (number of life cycles of lead-acid battery Y))/(number of life cycles of lead-acid battery X) -1.

When Sb is not contained in the positive electrode material, from the comparison between the lead-acid batteries A1 and B1, the ratio of stratification prevention due to the provision of the first rib is: (100 - 93)/100 = 0.07 (7%), and the improvement ratio of PSOC life performance is: (105 - 100)/100 = 0.05 (about 5%).

On the other hand, in the comparison of the lead-acid batteries A2 and B2, when Sb is contained in the positive electrode material at 0.02% by mass, the ratio of stratification prevention due to the provision of the first rib is: (93 - 75)/93 = 0.193 (19%), which is a significant improvement. Similarly, the ratio of improvement in PSOC life performance due to the provision of the first rib is: (132 - 120)/120 = 0.1 (10%), which is a significant improvement.

When the same evaluation is performed by comparing A3 and B3, A4 and B4, A5 and B5, A6 and B6, and A7 and B7, the results shown in Table 2 are obtained. Particularly in the comparison of the lead-acid batteries A5 and B5, when 0.15% by mass of Sb was contained in the positive electrode material, the ratio of stratification prevention due to the provision of the first rib is about 49%, and a remarkable improvement effect can be seen. Further, a significant effect of improvement by about 10% is also seen in the PSOC life performance.

**[Table 2]**

| | Sb amount in positive electrode [% by mass] | Ratio of stratification prevention [%] | Ratio of improvement in PSOC life performance [%] |
|---|---|---|---|
| A1-B1 | 0 | 7 | 5 |
| A2-B2 | 0.02 | 19 | 10 |
| A3-B3 | 0.05 | 32 | 10 |
| A4-B4 | 0.1 | 46 | 10 |
| A5-B5 | 0.15 | 49 | 10 |
| A6-B6 | 0.2 | 49 | 9 |
| A7-B7 | 0.25 | 41 | 12 |

It can thus be seen that by Sb being contained in the positive electrode material, the effect of preventing the stratification and the effect of improving the PSOC life performance due to the addition of the rib to the negative electrode plate side have been improved more than expected and have been increased significantly.

From Table 1, when the content of Sb is 0.2% by mass, the specific gravity difference between the upper and lower portions of the electrolyte solution is minimum, and the PSOC life performance is maximum. As the content of Sb increases, the decreased amount of liquid due to gas generation also increases. By holding down the content of Sb to 0.2% by mass or less, the effect of improving the life performance can be maximized while the decreased amount of liquid is held down.

Further, as can be seen from Table 1, in the batteries B2 to B4, despite the Sb being contained in the positive electrode material, the decrease in liquid has been prevented as compared to the battery A1 not containing Sb in the positive electrode material. It is conceivable that this is because, by providing the first rib on the negative electrode plate side, the sulfuric acid released from the electrode plate during charge can be mixed with the sulfuric acid in the space between the negative electrode plate and the separator, so that the specific gravity of the liquid on the surface of the electrode plate decreases, and the charge efficiency is improved.

When the content of Sb is in the range of 0.02 to 0.1% by mass, the provision of the first rib on the negative electrode plate side has significantly prevented the increase in the decreased amount of liquid, which has been the problem that occurs due to Sb being contained in the positive electrode material. It is thereby possible to achieve a lead-acid battery in which the decreased amount of liquid has been decreased and the PSOC life performance has been improved significantly.

### INDUSTRIAL APPLICABILITY

The lead-acid battery according to one aspect of the present invention is applicable to a valve regulated lead-acid battery and a flooded-type lead-acid battery, and can be suitably used as a power source for starting an automobile, a motorcycle, or the like.

### DESCRIPTION OF REFERENCE SIGNS

1: lead-acid battery
2: negative electrode plate
3: positive electrode plate
4: separator
5: positive electrode shelf
6: negative electrode shelf
7: positive electrode pole
8: through-connector
9: negative electrode pole
11: electrode group
12: container
13: partition
14: cell chamber
15: lid
16: negative electrode terminal
17: positive electrode terminal
18: vent plug

## Claims

1. A lead-acid battery comprising:
a positive electrode plate provided with a positive electrode material;
a negative electrode plate;
a separator interposed between the positive electrode plate and the negative electrode plate; and
an electrolyte solution,
wherein
the separator includes ribs on the positive electrode plate side and the negative electrode plate side, and
the positive electrode material contains 0.02% by mass or more of Sb.

2. The lead-acid battery according to claim 1, wherein the positive electrode material contains Sb in a range of 0.02% by mass or more and 0.2% by mass or less.

3. The lead-acid battery according to claim 2, wherein the positive electrode material contains Sb in a range of 0.02% by mass or more and 0.1% by mass or less.

4. The lead-acid battery according to any one of claims 1 to 3, wherein the separator has a bag shape.

5. The lead-acid battery according to claim 4, wherein the separator stores the negative electrode plate.

6. The lead-acid battery according to claim 4, wherein the separator stores the positive electrode plate.
